# FASCICULE DE BREVET EUROPEEN

(11) **EP 0 848 792 B1**
(45) Date de publication et mention de la délivrance du brevet: **02.02.2000**
(21) Numéro de dépôt: 96930226.4
(22) Date de dépôt: 06.09.1996
(51) Int. Cl.: F16K 17/12, F16K 17/10

(54) **SOUPAPE DE SECURITE POUR UNE ENCEINTE DE CONFINEMENT**
SICHERHEITSVENTIL FÜR EINEN SICHERHEITSBEHÄLTER
SAFETY VALVE FOR A CONTAINMENT CHAMBER

(30) Priorité: 08.09.1995 FR 9510543
(43) Date de publication de la demande: 24.06.1998
(73) Titulaire: COMPAGNIE GENERALE DES MATIERES NUCLEAIRES, 78140 Velizy Villacoublay (FR)
(72) Inventeur: BUSIN, Michel, F-59910 Bondues (FR); ALNET, Rémy, F-50120 Equeudreville (FR)
(74) Mandataire: Des Termes, Monique
(86) Numéro de dépôt international: FR9601372
(87) Numéro de publication internationale: WO9709554

(56) Documents cités:
- FR-A- 2 617 264
- GB-A- 2 119 132

## Description

### Domaine technique

La présente invention concerne une soupape de sécurité pour une enceinte de confinement.

### Etat de la technique antérieure

Une boîte à gants est une enceinte de confinement fermée permettant de manipuler des produits dangereux tels que des produits chimiques ou des produits radioactifs. Afin de préserver l'opérateur, une boîte à gants est maintenue en permanence en dépression, afin d'éviter une fuite de matières dangereuses à l'extérieur de la boîte à gants. La dépression à l'intérieur de la boîte à gants est régulée de manière à être maintenue entre un seuil supérieur et un seuil inférieur.

D'une façon générale, une enceinte de confinement comporte deux circuits de ventilation :
- un circuit normal de balayage permanent ;
- un circuit de sécurité sans débit en situation normale, mais établissant une extraction complémentaire en situation de rupture de confinement, le but de cette extraction complémentaire étant d'établir un confinement dynamique au droit de la rupture en obligeant l'air à rentrer avec une vitesse de l'ordre de 0,5 m/s dans l'enceinte.

La soupape de l'invention est destinée à équiper un tel circuit de sécurité.

Un circuit de sécurité est destiné à limiter les variations de pression absolue provoquées dans une enceinte en cas de :
- colmatage des filtres d'extraction ;
- mouvements de gants ;
- variation de pression dans le réseau général d'extraction, etc..

En cas de variation rapide et importante par rapport à la pression de référence, et selon la conception et l'état des paramètres du réseau de ventilation, il peut également assurer tout ou partie du débit de sécurité.

Ce circuit, tout ou rien, concourt à l'obtention du débit de sécurité en cas de rupture intempestive du confinement (arrachage d'un gant par exemple).

Mais un tel circuit ne doit jamais s'ouvrir (même de façon fugitive) en situation normale, lors de la manoeuvre des gants, pour préserver les filtres. Il doit assurer le débit de sécurité en cas de rupture de confinement avec un fonctionnement instantané.

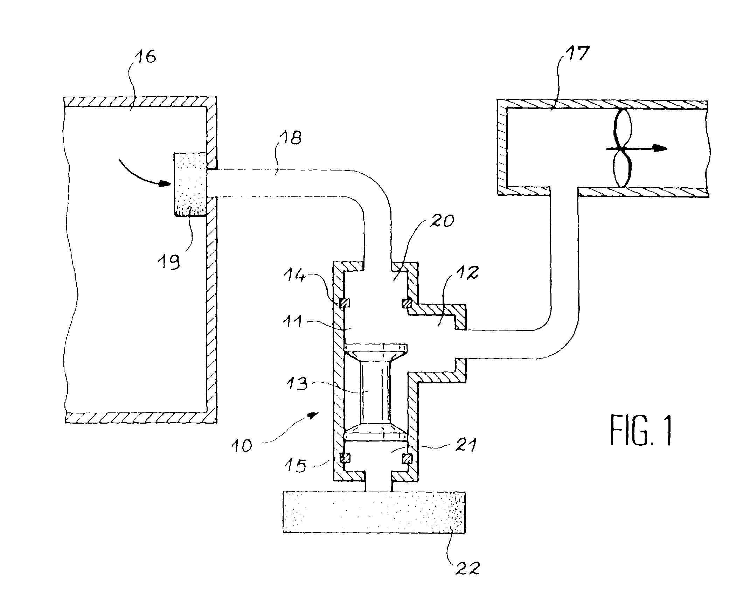

Les circuits de sécurité actuels peuvent être équipés d'une soupape standard, illustrée à la figure 1, munie d'un piston allégé pour limiter les ouvertures intempestives lors de la manoeuvre des gants.

Une telle soupape 10 comporte :
- un corps tubulaire constitué d'une branche principale 11 et d'une branche secondaire 12 débouchant à l'intérieur de la branche principale 11 ;
- un piston mobile 13 coulissant dans la branche principale du corps de la soupape ; selon le mode de fonctionnement désiré, le piston peut être lesté ou non ;
- deux joints toriques 14 et 15 assurant les fonctions de butée mécanique et d'étanchéité.

Une enceinte en dépression 16, par exemple une boîte à gants, est raccordée à un collecteur d'extraction 17 par l'intermédiaire d'une canalisation 18 comportant un filtre 19. La soupape 10 décrite précédemment est intercalée sur ladite canalisation. La partie supérieure 20 de la branche principale est reliée à l'enceinte 16 par l'intermédiaire de la canalisation 18 et la partie inférieure 21 de celle-ci est en communication avec une pression de référence, par exemple la pression atmosphérique, par l'intermédiaire d'un filtre 22. La branche secondaire 12 est raccordée au collecteur d'extraction 17.

La soupape 10 assure la régulation de dépression au-dessus du piston 13. Si la dépression de l'enceinte baisse, le piston descend et met l'enceinte en communication avec le collecteur d'extraction 17 jusqu'au rétablissement de la dépression normale. Si la dépression de l'enceinte augmente, l'effet contraire se produit. Pour une dépression donnée, le débit d'extraction désiré dans l'enceinte est obtenu par l'ajustement du lest interne au piston.

Toutefois, lors de la rupture de confinement, le piston 13 descend, mais sans faire toute sa course car trop léger, ce qui limite le débit extrait. Moyennant quoi, lorsqu'il est souhaité un débit de sécurité important, il est nécessaire de monter plusieurs soupapes en parallèle.

L'équilibre du piston 13 résulte de l'équilibre de deux forces verticales directement opposées :
- son poids, dirigé vers le bas ;
- une force sur sa face supérieure dirigée vers le haut résultante de la différence de pression sur les faces du piston.

Aucune force ne s'exerce sur la face inférieure qui communique avec l'ambiance. La dépression du réseau aval s'appliquant de la même façon en haut et en bas a une résultante nulle.

Ainsi, en fonctionnement normal, la dépression de l'enceinte 16 s'applique sur la face supérieure. Sa résultante est supérieure au poids du piston 13 qui reste donc en position haute avec un débit de sécurité nul. Toutefois, lors de la manoeuvre des gants, la dépression dans l'enceinte 16 varie et quand sa résultante devient égale ou inférieure au poids du piston 13, il y a chute partielle de celui-ci et établissement d'un débit de sécurité fugitif. On pourrait limiter ce phénomène en allégeant le piston.

En cas d'incident la dépression dans l'enceinte 16 tend vers zéro. Sa résultante sur la face supérieure du piston 13 devient inférieure à son poids, ce qui provoque l'ouverture de la soupape 10 et l'établissement du débit de sécurité. Toutefois ce débit induit des pertes de charge sur le circuit entre le dessus du piston 13 et l'enceinte 16 de l'ordre de-30 daPa en fonction de la tuyauterie et des filtres. Ces pertes de charge créent une dépression résiduelle limitant la descente du piston et par voie de conséquence le débit. On pourrait limiter ce phénomène en alourdissant le piston, ce qui est tout à fait contraire à ce qui est souhaitable.

Un exemple d'un tel dispositif de surveillance permettant la régulation de la pression dans une enceinte en dépression, telle qu'une boîte à gants, est décrit dans le brevet français n° 2 617 264, déposé le 25 juin 1987.

Celui-ci concerne, en effet, une soupape de sécurité pour une enceinte en dépression comprenant un corps tubulaire constitué d'une branche principale et d'une branche secondaire raccordée à ladite branche principale, et débouchant dans celle-ci par un orifice latéral, un piston monté coulissant à l'intérieur de ladite branche principale, pour dégager ledit orifice latéral de la branche principale, une butée montée à l'intérieur de la branche principale limitant le déplacement vers le haut dudit piston dans sa position de fermeture complète de l'orifice latéral, la partie inférieure de ladite branche principale étant fermée par un fond présentant un orifice central de mise en communication avec une pression de référence, un canal capillaire mettant en communication une zone de la branche principale située à proximité de l'orifice latéral et du côté du fond avec une zone située à proximité du fond de cette même branche, ledit piston comportant un moyen pour obturer l'orifice central du fond.

Mais cette soupape présente de nombreux inconvénients de fonctionnements tels que ceux définis précédemment.

Pour pallier ces différents inconvénients des dispositifs de l'art antérieur, l'invention a pour objet une soupape de sécurité permettant, en cas d'incident, de libérer le débit maximum permis par la soupape.

### Exposé de l'invention

La présente invention concerne une soupape de sécurité pour une enceinte de confinement comprenant un corps tubulaire constitué d'une branche principale et d'une branche secondaire raccordée à ladite branche principale, et débouchant dans celle-ci par un orifice latéral, un piston monté coulissant à l'intérieur de ladite branche principale, pour dégager ledit orifice latéral de la branche principale, une butée supérieure et une butée inférieure montées à l'intérieur de la branche principale limitant le déplacement dudit piston vers le haut et vers le bas, la partie inférieure de ladite branche principale étant en communication avec une pression de référence, caractérisée en ce qu'un dispositif de sécurité additionnel est positionné sous le corps tubulaire entre la partie inférieure de ladite branche principale et ladite pression de référence.

Avantageusement le dispositif de sécurité additionnel est vissé sous la soupape. Une variante a été conçue, essayée et installée, où le système additif a été construit en un seul bloc avec la soupape classique. Il se présente sous la forme d'un cylindre creux muni d'une cavité cylindrique dans laquelle un piston peut coulisser entre deux joints toriques assurant les fonctions de butée mécanique et d'étanchéité. Le piston est un piston allégé avec portées larges. Dans sa partie inférieure le cylindre est vissé sur un couvercle. Des joints d'étanchéité sont disposés respectivement entre la soupape et le cylindre, et entre le cylindre et le couvercle.

La partie supérieure de la branche principale est apte à être reliée à une enceinte en dépression par l'intermédiaire d'un filtre et la branche secondaire est apte à être reliée à un collecteur d'extraction.

Une première canalisation est disposée entre l'enceinte et le haut de la cavité. Une seconde canalisation est disposée entre la partie supérieure de la branche principale située au-dessus du joint supérieur et la partie centrale de la cavité, située entre les deux joints. Une troisième canalisation est disposée entre le dessous de la partie inférieure de la branche principale et la partie centrale de la cavité située entre les deux joints. Une quatrième canalisation est disposée entre la partie centrale de la cavité située entre les deux joints et la partie inférieure de cette cavité.

Avantageusement la troisième et la quatrième canalisations sont des conduits réalisés dans le corps du cylindre du dispositif additionnel, ou extérieurs à celui-ci.

Dans une application avantageuse l'enceinte en dépression est une boîte à gants, ou à pinces etc....

Afin de limiter la sensibilité de la soupape de l'invention aux variations de dépression due aux gants, les pistons sont le plus léger possible.

### Brève description des dessins

- La figure 1 illustre une vue schématique d'une soupape de régulation de l'art antérieur ;
- les figures 2 et 3 illustrent une vue schématique d'une soupape de l'invention respectivement dans un fonctionnement normal et dans un fonctionnement en cas d'incident.

### Exposé détaillé de modes de réalisation

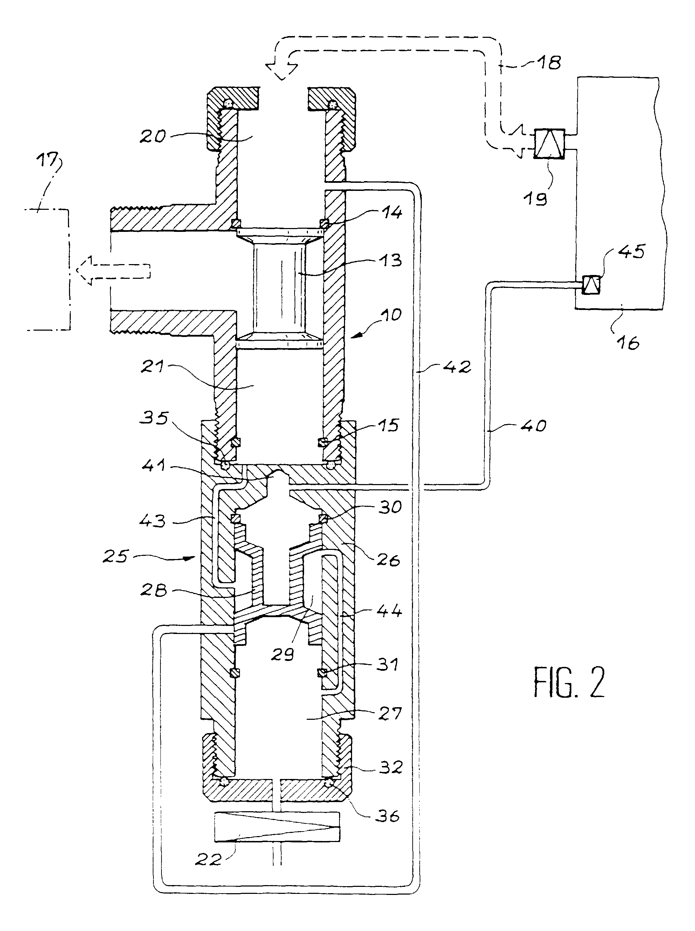

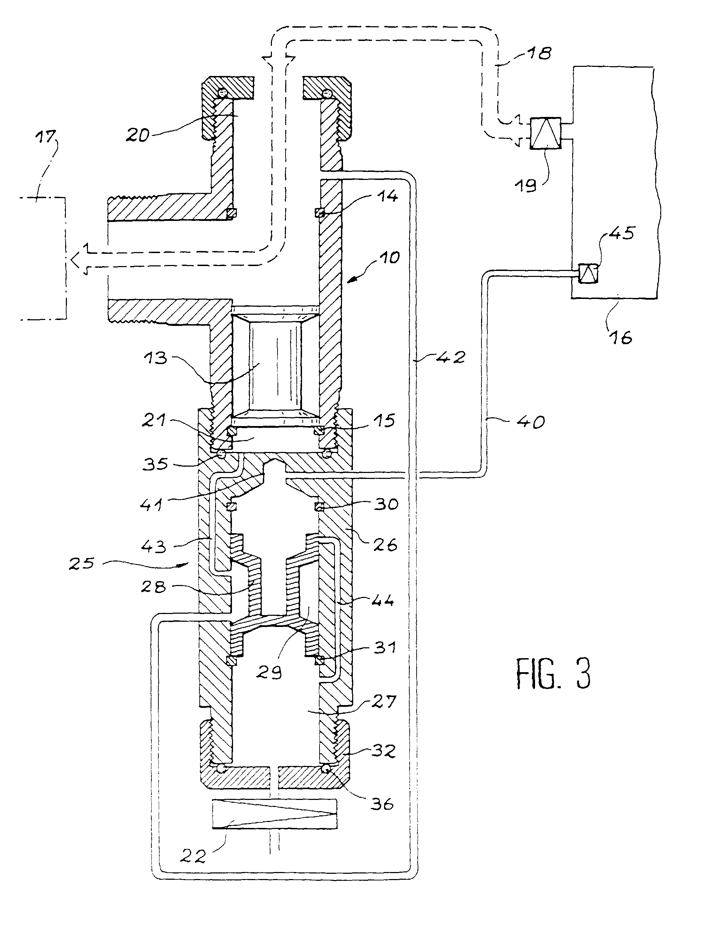

La soupape selon l'invention, telle que représentée aux figures 2 et 3 comprend un dispositif additionnel de sécurité 25 disposé, par vissage par exemple, sous la soupape de sécurité 10, telle que représentée sur la figure 1.

Dans une variante de réalisation la soupape de sécurité 10 et le dispositif additionnel 25 forment un ensemble monobloc.

Ce dispositif additionnel 25 oblige le piston 13 à s'ouvrir complètement en cas de rupture de confinement, ce qui se traduit par une augmentation considérable du débit traversant la soupape 10.

Ce dispositif additionnel se présente sous la forme d'un cylindre creux 26, muni d'une cavité cylindrique 27, comportant lui-même un piston 28 et venant se fixer sur la partie inférieure de la soupape de sécurité 10.

Le piston 28 est étanche sans joint comme le piston de la soupape 10, mais comporte des jupes allongées formant une ouverture annulaire périphérique 29 lui permettant de jouer le rôle de distributeur grâce à des canalisations internes.

La partie inférieure du cylindre communique avec la pression ambiante de la salle au travers du filtre 22, par exemple de type scaphandre.

Le piston 28 peut coulisser entre deux joints toriques 30, 31 assurant les fonctions de butée mécanique et d'étanchéité.

Avantageusement ce piston est un piston allégé avec des portées larges.

Dans sa partie inférieure ce cylindre 26 est vissé sur un couvercle 32.

Des joints d'étanchéité 35 et 36 sont disposés respectivement entre la soupape 10 et le cylindre 26, et entre le cylindre 26 et le couvercle 32.

Une première canalisation 40 est disposée entre l'enceinte 16 (via un filtre 45) et le haut 41 de la cavité 27.

Une seconde canalisation 42 est disposée entre la partie supérieure 20 de la branche principale située au-dessus du joint supérieur 14 et la partie centrale de la cavité 27, située entre les deux joints 30 et 31.

Une troisième canalisation 43 est disposée entre le dessous de la partie inférieure 21 de la branche principale et la partie centrale de la cavité 27 située entre les deux joints 30 et 31.

Une quatrième canalisation 44 est disposée entre la partie supérieure de la partie centrale de la cavité 27 située entre les deux joints 30 et 31 et la partie inférieure de cette cavité 27.

Avantageusement ces deux dernières canalisations 43 et 44 sont des conduits réalisés dans le corps du cylindre 26 du dispositif additionnel 25 de l'invention.

Le piston 28 est mis en mouvement par la dépression de l'enceinte 16 qui lui est appliquée par l'intermédiaire d'un piquage sans débit sur ladite enceinte 16.

Le piston 28 du dispositif additionnel travaille comme un distributeur qui permet d'appliquer sur la face inférieure du piston 13 de la soupape de sécurité 10 soit la pression ambiante de la salle, soit la même dépression agissant sur sa face supérieure (piston 13).

Comme représenté en figure 2, en fonctionnement normal, le premier et le second pistons 13 et 28 sont en butées hautes (contre les butées 14 et 30). La sortie vers le collecteur d'extraction 17 est obstruée par le premier piston 13. Une extrémité de la canalisation 42 est obstruée par le second piston 28.

Les troisième et quatrième canalisations 43 et 44 débouchent alors dans la chambre annulaire périphérique 29 du second piston 28 et permettent de mettre en communication la partie inférieure 21 de la branche principale et la partie inférieure de la cavité 27.

Ainsi en fonctionnement normal :
- la face supérieure du piston 13 de la soupape de sécurité 10 reçoit la dépression de l'enceinte 16 ;
- la face supérieure du piston 28 du dispositif additionnel 25 reçoit également la dépression de l'enceinte 16 ; sa face inférieure communiquant avec la pression ambiante de la salle, la résultante de dépression étant supérieur à son poids, ce piston 28 est aspiré vers le haut. Dans cette position il permet, par l'intermédiaire des canalisations, à la pression de l'ambiance de la salle de s'exercer sur la face inférieure du piston 13 de la soupape de sécurité 10 ; la résultante de dépression étant supérieure à son poids, ce piston 13 est maintenu en position haute, interdisant tout débit ;
- afin de limiter la sensibilité du système aux variations de dépression dues aux gants, les pistons 13 et 28 sont les plus légers possible.

De fait, des impératifs de construction font que le seuil de déclenchement ne peut être supérieur à -11 daPa par rapport à la salle.

Comme représenté en figure 3, en cas d'incident, les deux pistons 13 et 28 sont en butées inférieures (contre les butées 15 et 31). La canalisation 18 met alors en liaison l'enceinte 16 avec le collecteur d'extraction 17.

La deuxième et la troisième canalisations 42 et 43 débouchent dans la partie annulaire périphérique 29 du second piston 28, ce qui permet de mettre en relation la partie supérieure 20 de la branche principale et la partie inférieure 21 de la même branche principale. Le piston 28 obstrue une extrémité de la quatrième canalisation 44.

En cas d'incident, la dépression dans l'enceinte 16 tend vers zéro.

L'ordre de la dépression sur le dessus du piston 28 du cylindre additionnel 25 tend vers zéro. Le piston 28 tombe sous l'effet de son propre poids. Par l'intermédiaire des canalisations, la dépression résiduelle du dessus du piston 13 de la soupape de sécurité 10 se trouve également appliquée sur la face inférieure du même premier piston 13 qui va à son tour tomber sous l'effet de son propre poids sur l'intégralité de sa course, dégageant par là-même la totalité de la section d'extraction et autorisant ainsi le débit maximum permis par le circuit.

## Revendications

1. Soupape de sécurité pour une enceinte de confinement (16) comprenant un corps tubulaire constitué d'une branche principale (11) et d'une branche secondaire (12) raccordée à ladite branche principale (11), et débouchant dans celle-ci par un orifice latéral, un piston (13) monté coulissant à l'intérieur de ladite branche principale (11), pour dégager ledit orifice latéral de la branche principale, une butée supérieure (14) et une butée inférieure (15) montées à l'intérieur de la branche principale limitant le déplacement dudit piston (13) vers le haut et vers le bas, la partie inférieure de ladite branche principale (11) étant en communication avec une pression de référence, caractérisée en ce qu'un dispositif de sécurité additionnel (25) obligeant le piston à libérer l'orifice latéral en cas de rupture de confinement est positionné sous le corps tubulaire entre la partie inférieure (21) de ladite branche principale et ladite pression de référence.

2. Soupape de sécurité selon la revendication 1, caractérisée en ce que ce dispositif (25) se présente sous la forme d'un cylindre (26) creux muni d'une cavité cylindrique (27) dans laquelle un second piston (28) muni d'une ouverture annulaire périphérique peut coulisser entre deux joints toriques (30, 31) assurant les fonctions de butée mécanique et d'étanchéité.

3. Soupape de sécurité selon la revendication 2, caractérisée en ce que le second piston (28) est un piston allégé avec des portées larges.

4. Soupape de sécurité selon la revendication 1, caractérisée en ce que le dispositif de sécurité additionnel (25) est vissé sous la soupape (10).

5. Soupape de sécurité selon la revendication 1, caractérisée en ce que la soupape (10) et le dispositif aditionnel (25) forment un ensemble monobloc.

6. Soupape de sécurité selon la revendication 3, caractérisée en ce que dans sa partie inférieure le cylindre (26) est vissé sur un couvercle.

7. Soupape de sécurité selon la revendication 6, caractérisée en ce que des joints d'étanchéité (35 et 36) sont disposés respectivement entre la soupape (10) et le cylindre (26), et entre le cylindre (26) et le couvercle (32).

8. Soupape de sécurité selon l'une quelconque des revendications précédentes, caractérisée en ce que la partie supérieure (10) de la branche principale (11) est apte à être reliée à une enceinte en dépression par l'intermédiaire d'un filtre (19) et en ce que la branche secondaire (12) est apte à être reliée à un collecteur d'extraction (17).

9. Soupape de sécurité selon la revendication 2, caractérisée en ce qu'une première canalisation (40) est disposée entre l'enceinte (16) et le haut (41) de la cavité (27), en ce qu'une seconde canalisation (42) est disposée entre la partie supérieure (20) de la branche principale (11) située au dessus de la butée supérieure (14) et la partie centrale de la Cavité (27), située entre les deux joints toriques (30 et 31), en ce qu'une troisième canalisation (43) est disposée entre le dessous de la partie inférieure (21) de la branche principale (11) et la partie centrale de la cavité (27) située entre les deux joints toriques (30 et 31), et en ce qu'une quatrième canalisation (44) est disposée entre la partie centrale de la cavité (27) située entre les deux joints toriques (30 et 31) et la partie inférieure de cette cavité (27).

10. Soupape selon la revendication 9, caractérisée en ce que la troisième et la quatrième canalisations (43, 44) sont des conduits réalisés dans le corps du cylindre (26) du dispositif additionnel (25).

11. Soupape selon l'une quelconque des revendications précédentes, caractérisée en ce que l'enceinte de confinement (16) est une boîte à gants.

12. Soupape selon l'une quelconque des revendications précédentes, caractérisée en ce que les pistons (13, 28) sont les plus légers possibles.

## Claims

1. Safety valve for a containment (16) comprising a tubular body composed of a main branch (11) and a secondary branch (12) connected to said main branch (11) and opening into it via an aperture in the side of said main branch, a piston (13) mounted so that it slides inside said main branch (11), to free the said lateral aperture from the main branch, an upper stop (14) and a lower stop (15) both mounted inside the main branch and limiting the upward and downward displacement of said piston (13), the lower section of said main branch (11) being subject to a reference pressure, characterized in that an additional safety apparatus (25) obliging the piston to free the lateral aperture in the case of a containment break is positioned under the tubular body between the lower section (21) of said main branch and said reference pressure.

2. Safety valve of claim 1, characterized in that said apparatus (25) is in the form of a hollow cylinder (26) provided with a cylindrical cavity (27) in which a second piston (28) fitted with a peripheral annular opening slides between two O-rings (30, 31) that act both as mechanical stops and leaktight seals.

3. Safety valve of claim 2, characterized in that the second piston (28) is lightweight and has wide bearing surfaces.

4. Safety valve of claim 1, characterized in that additional safety apparatus (25) is screwed underneath safety valve (10).

5. Safety valve of claim 1, characterized in that the safety valve (10) and additional safety apparatus (25) are combined in a single part.

6. Safety valve of claim 3 characterized in that the lower part of cylinder (26) is screwed onto a cap.

7. Safety valve of claim 6 characterized in that leaktight seals (35 and 36) are disposed between the valve (10) and the cylinder (26), and between the cylinder (26) and the cap (32) respectively.

8. Safety valve of any of the foregoing claims characterized in that the upper section (10) of the main branch (11) is capable of being connected to a containment under negative pressure via a filter (19), and the secondary branch (12) is capable of being connected to an extraction collector (17).

9. Safety valve of claim 8 characterized in that a first pipe (40) is disposed between the containment (16) and the top (41) of the cavity (27), that a second pipe is disposed between the upper section (20) of the main branch (11) located above the upper seal (14) and the central section of the cavity (27), located between the two seals (30 and 31), that a third pipe (43) is disposed between the bottom of the lower section (21) of the main branch (11) and the central section of the cavity (27) located between the two seals (30 and 31), and that a fourth pipe (44) is disposed between the two central part of cavity (27) located between the two seals (30 and 31) and the lower section of this cavity (27).

10. Safety valve of claim 9 characterized in that the third and fourth pipes (43, 44) are conduits bored in the body of the cylinder (26) of additional safety apparatus (25).

11. Safety valve of any of the foregoing claims characterized in that containment (16) is a glove box.

12. Safety valve of any of the foregoing claims characterized in that the pistons (13, 28) are as lightweight as possible.

## Patentansprüche

1. Sicherheitsventil für einen Sicherheitsbehälter (16) mit einem röhrenförmiges Gehäuse, gebildet durch einen Hauptzweig (11) und einen Nebenzweig (12), mit dem Hauptzweig (11) verbunden und durch eine seitliche Öffnung in diesen mündend, und einem Kolben (13), gleitend ins Innere des Hauptzweigs (11) montiert, um die genannte seitliche Öffnung des Hauptzweigs freizugeben, sowie einem oberen Anschlag (14) und einen unteren Anschlag (15), angebracht im Innern des Hauptzweigs (11), um die Verschiebung des genannten Kolbens (13) nach oben und nach unten zu begrenzen, wobei der Unterteil des Hauptzweigs (11) mit einem Referenzdruck verbunden ist,
**dadurch gekennzeichnet**,
dass eine Zusatz-Sicherheitsvorrichtung (25), die den Kolben zwingt, die seitliche Öffnung freizugeben, im Falle eines Brechens bzw. Reißens der Sicherheitseinschließung unter dem röhrenförmigen Gehäuse positioniert ist, zwischen dem Unterteil (21) des genannten Hauptzweigs und dem genannten Referenzdruck.

2. Ventil nach Anspruch 1, dadurch gekennzeichnet, dass diese Vorrichtung (25) sich in Form eines hohlen Zylinders (26) präsentiert, versehen mit einem zylindrischen Hohlraum (27), in dem ein zweiter Kolben (28), versehen mit einer peripheren ringförmigen Öffnung, zwischen zwei Dichtringen (30, 31) gleiten kann, die die Funktionen des mechanischen Anschlags und der Abdichtung sicherstellen.

3. Ventil nach Anspruch 2, dadurch gekennzeichnet, dass der zweite Kolben (28) ein leicht ausgeführter Kolben mit breiten Auflageflächen ist.

4. Ventil nach Anspruch 1, dadurch gekennzeichnet, dass die Zusatz-Sicherheitsvorrichtung (25) unter das Ventil (10) geschraubt wird.

5. Ventil nach Anspruch 1, dadurch gekennzeichnet, daß das Ventil (10) und die Zusatzvorrichtung (25) eine Einblock-Einheit bilden.

6. Ventil nach Anspruch 3, dadurch gekennzeichnet, dass der Zylinder (26) mit seinem Unterteil in einen Deckel geschraubt ist.

7. Ventil nach Anspruch 6, dadurch gekennzeichnet, dass Dichtringe (35 und 36) jeweils zwischen dem Ventil (10) und dem Zylinder (26) und zwischen dem Zylinder (26) und dem Deckel (32) angeordnet sind.

8. Ventil nach einem der vorangehenden Ansprüche, dadurch gekennzeichnet, dass der Oberteil des Hauptzweigs (11) über einen Filter (19) mit einem Unterdruckbehälter verbunden werden kann, und dadurch, dass der Nebenzweig (12) mit einem Extraktionssammler (17) verbunden werden kann.

9. Ventil nach Anspruch 2, dadurch gekennzeichnet, dass eine erste Leitung (40) den Behälter (16) und mit der Oberseite (41) des Hohlraums (27) verbindet, dass eine zweite Leitung (42) den über dem oberen Anschlag (14) befindlichen Oberteil des Hauptzweigs (11) mit dem zwischen den beiden Dichtringen (30 und 31) befindlichen Mittelteil des Hohlraums (27) verbindet, dass eine dritte Leitung (43) den Unterteil (21) des Hauptzweigs (11) mit dem zwischen den beiden Dichtringen (30 und 31) befindlichen Mittelteil (27) verbindet, und daß eine vierte Leitung (44) den zwischen den beiden Dichtringen (30 und 31) befindlichen Mittelteil des Hohlraums (27) mit dem Unterteil dieses Hohlraums (27) verbindet.

10. Ventil nach Anspruch 9, dadurch gekennzeichnet, dass die dritte und vierte Leitung (43, 44) Leitungen sind, die in dem Gehäuse des Zylinders (26) der Zusatzvorrichtung (25) realisiert sind.

11. Ventil nach einem der vorangehenden Ansprüche, dadurch gekennzeichnet, dass der Sicherheitsbehälter (16) ein Handschuhkasten ist.

12. Ventil nach einem der vorangehenden Ansprüche, dadurch gekennzeichnet, daß die Kolben (13, 28) so leicht wie möglich sind.
